# FASCICULE DE BREVET EUROPEEN

(11) **EP 3 329 334 B1**
(45) Date de publication et mention de la délivrance du brevet: **03.03.2021**
(21) Numéro de dépôt: 16757287.4
(22) Date de dépôt: 20.07.2016
(51) Int. Cl.: F17C 13/00, G05B 19/05, G05B 15/02, G05B 19/042

(54) **PILOTAGE D'UNE INSTALLATION DE DISTRIBUTION DE GAZ À DISTANCE**
FERNSTEUERUNG EINER GASVERTEILUNGSANLAGE
REMOTE CONTROL OF A GAS-DISTRIBUTION FACILITY

(30) Priorité: 31.07.2015 FR 1557389
(43) Date de publication de la demande: 06.06.2018
(73) Titulaire: L'Air Liquide Société Anonyme pour l'Etude et l'Exploitation des Procédés Georges Claude, 75007 Paris (FR); Air Liquide Electronics Systems, 75007 Paris (FR)
(72) Inventeur: OUERD, Aziz, 38100 Grenoble (FR); DOS REIS, Henrique, 38210 Polienas (FR); DULPHY, Hervé, 38560 Jarrie (FR)
(74) Mandataire: Air Liquide
(86) Numéro de dépôt international: PCT/FR2016/051878
(87) Numéro de publication internationale: WO 2017/021617

(56) Documents cités:
- EP-A1- 2 813 910
- WO-A2-2004/052487
- DE-A1-102009 007 286
- DE-A1-102012 013 773
- US-A- 4 989 160
- US-A1- 2004 194 980
- US-A1- 2012 315 837
- US-A1- 2013 207 771
- US-A1- 2014 059 483

## Description

La présente invention concerne l'utilisation d'un système de stockage et de traitement de données pour piloter une armoire à gaz (en anglais gas cabinet) à distance.

Par armoire à gaz ou « gas cabinet », on entend : installation de distribution de gaz.

Une armoire à gaz est un dispositif de distribution de gaz spéciaux (ESG) pour une utilisation lors d'applications spécifiques et ponctuelles dans différentes industries telles que les industries du semi-conducteur, du photovoltaïque, des LED, des écrans plats ou toute autre industrie comme les industries minières ou pharmaceutiques.

La mise en œuvre de ces procédés nécessite souvent l'utilisation de gaz dangereux de haute qualité réclamant par exemple des purges automatiques et une distribution continue. Par exemple, la fabrication de circuits électroniques nécessite l'utilisation de divers gaz dits "de travail" comme par exemple Cl₂, NH₃, HCI, HBr, NF₃ ou WF₆ etc. qui sont considérés pour la plupart comme dangereux pour l'homme du fait de leur toxicité et/ou de leur inflammabilité.

Beaucoup d'installations industrielles exigent un équipement capable de commander automatiquement l'approvisionnement en gaz et fluides de certains équipements. Par exemple, la fabrication des circuits intégrés inclut généralement plusieurs procédés tels que, par exemple, la déposition en phase vapeur dans laquelle une variété de gaz est amenée dans une chambre de réaction dans laquelle est confiné un substrat de semi-conducteur. La température et la pression de dépôt des diverses couches de matériaux développés pour créer les modèles tridimensionnels de circuits intégrés sont soigneusement contrôlées dans cette enceinte.

Toutes les substances transportées dans et hors de la chambre de réaction doivent être constamment surveillées, puisque les proportions des différents réactifs qui constituent l'atmosphère de vapeur déterminent finalement les dimensions physiques des éléments qui composeront collectivement un circuit électrique simple et vaste sur un morceau minuscule de silicium, notamment des transistors, des condensateurs, et des résistances.

Une des plus grandes causes de mauvais fonctionnement des circuits intégrés est attribuable aux particules de poussière microscopiques qui contaminent la zone de travail où le circuit est fabriqué. Un corps étranger minuscule peut endommager un circuit très cher et le rendre inutilisable. Afin de se protéger d'une telle contamination particulaire, les fabricants de semi-conducteurs fabriquent leurs produits dans un environnement de "salle blanche" protégée.

L'air admis dans une salle blanche est d'abord filtré, éliminant ainsi presque entièrement les particules de poussière non désirées. Les techniciens qui travaillent dans ces environnements, portent une tenue et des masques spéciaux qui empêchent l'introduction de substances qui endommageraient leur travail méticuleux. Les coûts liés à la maintenance et au bon fonctionnement de cet environnement fortement spécialisé sont considérables. En conséquence, tout l'espace d'une salle blanche doit être utilisé le plus efficacement possible.

Outre ce besoin critique, les produits chimiques utilisés doivent être distribués avec grand soin. Les produits chimiques liquides ainsi que les gaz spéciaux utilisés dans l'industrie des semi-conducteurs sont souvent toxiques. Les dispositifs choisis pour distribuer ces produits potentiellement dangereux, doivent assurer un usage fiable, protégé de la corrosion ou de la fuite.

Dans un système classique de distribution de gaz, les grands volumes de gaz à purger, potentiellement dangereux, créent des problèmes de sûreté. Les ensembles de tuyauterie et d'ajustage de précision sont également enclins aux fuites ou à des dommages graves pendant l'utilisation. Ces installations ne sont donc pas adaptées à des utilisations ponctuelles nécessitant des déconnexions et des purges fréquentes multipliant les risques pour l'opérateur d'être exposé à des gaz dangereux.

Ces « gas cabinets » standards sont surtout utilisables de manière courante et fiable pour des applications de production et de distribution à longue durée. Ces systèmes sont installés intégralement dans des grandes armoires dans des pièces dédiées pouvant se trouver à plusieurs dizaines de mètres de l'équipement auquel ils sont raccordés.

Les gas cabinets standards comportent une « interface homme-machine » connectée à un automate programmable servant à piloter, c'est-à-dire, contrôlant et gérant la maintenance du système de distribution de gaz dudit « gas cabinet ».

Cette interface homme-machine possède par exemple un écran tactile d'une taille supérieure ou égale à 10 pouces permettant à l'utilisateur de donner ces instructions à l'automate directement à partir de cet écran.

Cette opération peut s'avérer fastidieuse pour l'utilisateur qui est obligé de se déplacer jusqu'à l'armoire à gaz et ne peut donc piloter l'armoire à gaz qu'à partir de l'écran intégré à ladite armoire. Autrement dit, il y a autant d'interfaces homme-machine que d'armoires à gaz à piloter. Cela constitue une contrainte de temps perdu mais également d'encombrement de l'armoire à gaz à piloter qui doit nécessairement être munie d'un écran suffisamment grand pour faire apparaître tous les paramètres à contrôler et/ou piloter pour commander le système de distribution de gaz.

Le document US-A-4989160 divulgue une installation de distribution de gaz conforme au préambule de la revendication 1. Le contrôle à distance de l'installation est réalisé par un ordinateur fixe contenant les mêmes informations et proposant les mêmes fonctions que l'interface homme-machine.

Par ailleurs, on connaît du document DE-A-102009007286 une machine d'usinage munie d'une interface homme-machine et d'un automate programmable intégré à la machine et contenant les paramètres de contrôle de l'installation.

Les documents DE-A-102012013773 et US-A-2013201771 divulguent l'utilisation de téléphones intelligents pour le contrôle à distance d'installations dans les domaines de l'usinage ou de l'irrigation et de la surveillance de cultures.

Il existe donc un besoin de minimiser le coût, l'encombrement et le nombre de composants tout en gardant les fonctionnalités nécessaires des armoires à gaz dans les domaines d'applications mentionnés ci-dessus.
C'est pourquoi la présente invention a pour objet un ensemble selon la revendication 1.

Selon d'autres modes particuliers, l'invention a aussi pour objet :
- Ensemble selon l'invention dans lequel ledit port de communication est choisi parmi un émetteur-récepteur sans fil, un port ethernet, un émetteur-récepteur radio cellulaire, un émetteur-récepteur WIFI et un émetteur-récepteur Bluetooth.
- Ensemble selon l'invention dans lequel ledit logement contient deux bouteilles de gaz.
- Méthode d'échange de données de maintenance et/ou de commande d'un système de distribution de gaz spéciaux entre au moins une installation telle que définie ci-dessus et un système de stockage et de traitement de données portable distinct de l'installation, l'installation et le système de stockage et de traitement de données portable appartenant à un ensemble selon l'invention.
- Méthode telle que définie ci-dessus caractérisée en ce que l'échange de données est établi entre le système de stockage et de traitement de données portable distinct de l'installation et un nombre d'installations compris entre 2 et 20.

Le système de stockage et de traitement de données pour piloter une armoire à gaz mis en œuvre pour la présente invention peut se présenter sous la forme d'une tablette, d'un smartphone, d'un ordinateur portable lorsqu'une opération de maintenance ou même d'utilisation quotidienne est envisagée, ou d'un ordinateur de bureau.

Selon une possibilité ne faisant pas partie de l'invention, ledit smartphone duplique les vues de l'interface homme-machine et est donc utilisé pour les opérations quotidiennes. Les autres dispositifs peuvent être utilisés à la fois pour les opérations quotidiennes et la maintenance.

Ce système est associé à une interface homme-machine (IHM) et à un automate programmable de tailles réduites installés sur l'armoire. Il contient donc une série de paramètres qui ne figurent plus sur la nouvelle IHM et un schéma du procédé et de l'instrumentation qui permettent à la fois de contrôler les composants (ouvrir une vanne, lancer une séquence de purge ou la distribution du gaz), mais également d'accéder à des fonctions inaccessibles sur l'IHM, telles que les paramètres des capteurs de pression et de température, ainsi que des paramètres d'options avancées, comme ceux de l'AVP (All Vapour Phase) du chauffage résistif des bouteilles lorsque le gaz distribué est sous forme liquéfiée. Il est connecté à l'armoire à gaz soit à travers un réseau sans fil (WIFI), soit à travers un câble réseau (ethernet).

Le même système de stockage et de traitement de données pouvant être utilisé pour piloter plusieurs armoires à gaz (« gas cabinets »), un code d'identification est associé à chacune des armoires à gaz (« gas cabinets ») se trouvant sur le parc de l'utilisateur pour s'assurer que ledit système de stockage et de traitement de données ne communique qu'avec l'armoire à gaz sur laquelle l'utilisateur souhaite intervenir.

Selon l'invention, pour des raisons de sécurité, un verrouillage physique (à l'aide d'une clef par exemple) de la communication entre ce système de stockage et de traitement de données et l'armoire à gaz est mis en place.

Selon une possibilité ne faisant pas partie de l'invention, une autre application de l'utilisation d'un téléphone intelligent (smartphone) d'une tablette ou d'un ordinateur portable pour piloter une armoire à gaz, notamment au cours des opérations de maintenance peut par exemple être la duplication des synoptiques de l'IHM (interface homme-machine) et donc la réalisation des mêmes opérations réalisable avec cette dernière.

Une armoire à gaz mise en œuvre selon la présente invention comporte un logement avec un mur arrière, des flancs, une paroi avant, un fond, et un plafond. Dans le logement, deux bouteilles de gaz sont prévues qui se dressent sur le fond et sont fixées dans le logement de manière connue dans l'état de la technique. Les deux bouteilles de gaz sont positionnées de telle manière qu'un espacement minimal est présent entre les deux et contiennent des gaz fournis d'une manière connue à un consommateur. Les bouteilles de gaz peuvent, optionnellement avoir chacune une soupape de gaz avec laquelle elles sont reliées à un système de conduits de gaz. Le système de conduits de gaz a deux branches de conduits connectés à une ligne de sortie commune. Les deux branches de conduits peuvent être fermées, par exemple, par une vanne, respectivement, par rapport à la ligne de sortie. Pendant le fonctionnement de l'armoire à gaz, de manière avantageuse, une seule des deux bouteilles de gaz est en cours d'utilisation. Les branches de conduits de l'autre bouteille de gaz étant alors fermées, par exemple, par la vanne de la ligne de sortie. L'armoire à gaz peut également avoir une seule bouteille de gaz ou plus de deux bouteilles de gaz.

Par gaz spéciaux on entend tous les gaz généralement utilisés dans l'industrie des semi-conducteurs. Il peut s'agir de gaz inertes, toxiques, corrosifs, ou pyrophoriques. Ces gaz spéciaux peuvent être choisis parmi : HF, WF6, BCl3, CIF3, DCS, 3MS, C4F6, C4F8O, C4F8, Butane, SO2, Cl2, C3F8, NH3, Propane, SF6, HBr, C2F6, CH3F, HCl, CHF3, N2O contenus dans une bouteille sous forme liquéfiée, ou encore parmi F2, PH3, B2H6, NO, NF3, SiH4, CF4, CH4, CO contenus dans la bouteille sous forme comprimée. Ainsi selon la nature du gaz à distribuer et son état, liquéfié ou comprimé, la pression à l'intérieur de la bouteille est comprise entre 0 bar et 200 bars.

Tous les composants utilisés sont conformes au standard de l'industrie du semi-conducteur.

## Revendications

1. Ensemble comprenant une installation de distribution de gaz et un système de stockage et de traitement de données portable distinct de l'installation, ladite installation comprenant :
- un logement adapté pour recevoir au moins une bouteille de gaz et ayant une ouverture d'entrée de gaz et une ouverture de sortie de gaz ;
- un système de conduits de gaz arrangé dans ledit logement auquel ladite au moins une bouteille de gaz est connectée ;
- un système de distribution de gaz relié à ladite ouverture de sortie permettant l'alimentation d'un équipement,
- au moins un port de communication et un automate programmable, ledit automate étant muni d'un processeur apte à traiter des données provenant au moins en partie du système de stockage et de traitement de données portable distinct de l'installation, lesdites données servant à gérer des paramètres de contrôle et/ou de maintenance dudit système de distribution de gaz tels que :
- l'ouverture ou la fermeture de vannes incluses dans ledit système de conduits,
- le lancement d'un cycle de purge,
- la distribution de gaz,
- la gestion de la pression et/ou de la température dudit système de distribution de gaz,
- le chauffage de ladite au moins une bouteille de gaz,
l'installation comprenant en outre une interface homme-machine connectée audit automate,
ledit ensemble étant **caractérisé en ce que**
- l'interface homme-machine comprend un écran tactile dont la taille est inférieure ou égale à douze pouces, de préférence inférieure à six pouces,
- l'automate est commandé par le système de stockage et de traitement de données portable distinct de l'installation à gaz, ledit système de stockage et de traitement de données portable distinct de l'installation étant choisi parmi une tablette, un téléphone intelligent tel qu'un smartphone, un ordinateur portable,
- le système de stockage et de traitement de données portable distinct de l'installation contient des paramètres de contrôle et/ou de maintenance dudit système de distribution de gaz inaccessibles sur l'interface homme-machine telles que les paramètres des capteurs de pression et de température, le chauffage résistif de ladite au moins une bouteille de gaz lorsque le gaz distribué est sous forme liquéfiée,
- ledit ensemble comprenant en outre un organe de verrouillage physique de la communication entre ledit système de stockage et de traitement de données et l'installation.

2. Ensemble selon la revendication 1 **caractérisé en ce que** ledit port de communication est choisi parmi un émetteur-récepteur sans fil, un port ethernet, un émetteur-récepteur radio cellulaire, un émetteur-récepteur WIFI et un émetteur-récepteur Bluetooth.

3. Ensemble selon l'une quelconque des revendications précédentes, **caractérisé en ce que** ledit logement contient deux bouteilles de gaz.

4. Méthode d'échange de données de maintenance et/ou de commande d'un système de distribution de gaz spéciaux entre au moins une installation de distribution de gaz et un système de stockage et de traitement de données portable distinct de l'installation, l'installation et le système de stockage et de traitement de données portable appartenant à un ensemble tel que défini par l'une des revendications 1 à 3, comprenant l'étape de transmission de données par une connexion sans fil telle qu'une connexion WIFI ou bluetooth ou une connexion établie par câble ethernet.

5. Méthode selon la revendication 4 **caractérisée en ce que** l'échange de données est établi entre le système de stockage et de traitement de données portable distinct de l'installation et un nombre d'installations compris entre 2 et 20.

## Patentansprüche

1. Anordnung, umfassend eine Gasverteilungsanlage und ein tragbares Datenspeicherungs- und -verarbeitungssystem, das von der Anlage gesondert ist, wobei die Anlage umfasst:
- eine Aufnahme, die geeignet ist, wenigstens eine Gasflasche aufzunehmen und eine Gaseintrittsöffnung und eine Gasaustrittsöffnung aufweist;
- ein Gasleitungssystem, das in der Aufnahme angeordnet ist, an welches die wenigstens eine Gasflasche angeschlossen ist;
- ein Gasverteilungssystem, das mit der Austrittsöffnung verbunden ist, das die Versorgung einer Ausrüstung gestattet,
- wenigstens einen Kommunikationsanschluss und eine speicherprogrammierbare Steuerung, wobei die Steuerung mit einem Prozessor versehen ist, der geeignet ist, Daten zu verarbeiten, die wenigstens teilweise vom tragbaren Datenspeicherungs- und -verarbeitungssystem, das von der Anlage gesondert ist, stammen, wobei die Daten dazu dienen, Kontroll- und/oder Wartungsparameter des Gasverteilungssystems zu verwalten, wie beispielsweise:
- das Öffnen oder Schließen von Ventilen, die im Leitungssystem enthalten sind,
- das Starten eines Ablasszyklus,
- die Gasverteilung,
- die Regelung des Drucks und/oder der Temperatur des Gasverteilungssystems,
- die Erwärmung der wenigstens einen Gasflasche, wobei die Anlage ferner eine Mensch-Maschine-Schnittstelle umfasst, die an die Steuerung angeschlossen ist,
wobei die Anordnung **dadurch gekennzeichnet ist, dass**
- die Mensch-Maschine-Schnittstelle einen Berührungsbildschirm umfasst, dessen Größe kleiner als oder gleich zwölf Zoll, vorzugsweise kleiner als sechs Zoll ist,
- die Steuerung vom tragbaren Datenspeicherungs- und
- verarbeitungssystem, das von der Gasanlage gesondert ist, gesteuert wird, wobei das tragbare Datenspeicherungs- und
- verarbeitungssystem, das von der Anlage gesondert ist, aus einem Tablet, einem intelligenten Telefon wie beispielsweise einem Smartphone, oder einem tragbaren Computer gewählt ist,
- das tragbare Datenspeicherungs- und -verarbeitungssystem, das von der Anlage gesondert ist, Kontroll- und/oder Wartungsparameter des Gasverteilungssystems enthält, die auf der Mensch-Maschine-Schnittstelle nicht zugänglich sind, wie beispielsweise die Parameter der Druck- und Temperatursensoren, die Widerstandserwärmung der wenigstens einen Gasflasche, wenn das verteilte Gas in verflüssigter Form vorliegt,
- wobei die Anordnung ferner ein Element zur physischen Sperrung der Kommunikation zwischen dem Datenspeicherungs- und -verarbeitungssystem und der Anlage umfasst.

2. Anordnung nach Anspruch 1, **dadurch gekennzeichnet, dass** der Kommunikationsanschluss aus einem drahtlosen Sendeempfänger, einem Ethernet-Anschluss, einem zellenbasierten Funksendeempfänger, einem Wi-Fi-Sendeempfänger und einem Bluetooth-Sendeempfänger gewählt ist.

3. Anordnung nach einem der vorhergehenden Ansprüche, **dadurch gekennzeichnet, dass** die Aufnahme zwei Gasflaschen enthält.

4. Verfahren zum Austausch von Wartungs- und/oder Steuerungsdaten eines Systems zur Verteilung von Spezialgasen zwischen wenigstens einer Gasverteilungsanlage und einem tragbaren Datenspeicherungs- und -verarbeitungssystem, das von der Anlage gesondert ist, wobei die Anlage und das tragbare Datenspeicherungs- und -verarbeitungssystem zu einer Anordnung nach einem der Ansprüche 1 bis 3 gehören, umfassend den Schritt des Übertragens von Daten durch eine drahtlose Verbindung wie beispielsweise eine Wi-Fi- oder Bluetooth-Verbindung, oder eine Verbindung, die über Ethernetkabel hergestellt ist.

5. Verfahren nach Anspruch 4, **dadurch gekennzeichnet, dass** der Austausch von Daten zwischen dem tragbaren Datenspeicherungs- und -verarbeitungssystem, das von der Anlage gesondert ist, und einer Anzahl von Anlagen zwischen 2 und 20 hergestellt wird.

## Claims

1. Assembly comprising a gas distribution installation and a portable data storage and processing system distinct from the installation, said installation comprising:
- a housing suitable for receiving at least one gas cylinder and having a gas input opening and a gas output opening;
- a system of gas ducts arranged in said housing to which said at least one gas cylinder is connected;
- a gas distribution system linked to said output opening allowing an equipment item to be supplied,
- at least one communication port and a programmable logic controller, said logic controller being provided with a processor capable of processing data originating at least partly from the portable data storage and processing system distinct from the installation, said data being used to manage control and/or maintenance parameters of said gas distribution system such as:
- the opening or closing of valves included in said system of ducts,
- the launching of a bleed cycle,
- the gas distribution,
- the management of the pressure and/or of the temperature of said gas distribution system,
- the heating of said at least one gas cylinder, the installation further comprising a human-machine interface connected to said logic controller,
said assembly being **characterized in that**
- the human-machine interface comprises a touch screen whose size is less than or equal to 12 inches, preferably less than 6 inches,
- the logic controller is controlled by the portable data storage and processing system distinct from the gas installation, said portable data storage and processing system distinct from the installation being chosen from among a tablet, a smart telephone such as a smartphone, and a portable computer,
- the portable data storage and processing system distinct from the installation contains control and/or maintenance parameters of said gas distribution system that are not accessible on the human-machine interface such as the parameters of the pressure and temperature sensors, the resistive heating of said at least one gas cylinder when the gas distributed is in liquified form,
- said assembly further comprising a member for physically locking communication between said data storage and processing system and the installation.

2. Assembly according to Claim 1, **characterized in that** said communication port is chosen from among a wireless transceiver, an Ethernet port, a cellular radio transceiver, a Wi-Fi transceiver and a Bluetooth transceiver.

3. Assembly according to either of the preceding claims, **characterized in that** said housing contains two gas cylinders.

4. Method for exchanging maintenance and/or control data of a specialty gas distribution system between at least one gas distribution installation and a portable data storage and processing system distinct from the installation, the installation and the portable data storage and processing system belonging to an assembly as defined in any one of Claims 1 to 3, comprising the step of transmission of data by a wireless connection such as a Wi-Fi or Bluetooth connection or a connection set up by Ethernet cable.

5. Method according to Claim 4, **characterized in that** the exchange of data is set up between the portable data storage and processing system distinct from the installation and a number of installations lying between 2 and 20.
